## Europäisches Patentamt
## European Patent Office
## Office européen des brevets

(19)

(11) Veröffentlichungsnummer: **0 133 187**
**B1**

(12) **EUROPÄISCHE PATENTSCHRIFT**

(45) Veröffentlichungstag der Patentschrift:
23.08.89

(21) Anmeldenummer: **83107544.5**

(22) Anmeldetag: **01.08.83**

(51) Int. Cl.⁴: **F 16 H 29/08,** F 16 H 29/00,
B 62 M 1/06

(54) In einem flüssigkeitsdichten Getriebegehäuse integrierter, stufenlos verstellbarer Fahrradtrieb mit eingelagertem Rücktrittfreilauf und angelenktem Schwingfederungsteil.

(43) Veröffentlichungstag der Anmeldung:
20.02.85 Patentblatt 85/8

(45) Bekanntmachung des Hinweises auf die Patenterteilung:
23.06.89 Patentblatt 89/34

(84) Benannte Vertragsstaaten:
AT BE CH DE FR GB IT LI LU NL SE

(56) Entgegenhaltungen:
FR-A-1 206 528
GB-A-842 221
US-A-2 950 623

(73) Patentinhaber: **Huber, Jutta Helene, Bergstrasse 9,
D-7897 Küssaberg- Kadelburg (DE)**
Patentinhaber: **Hardwagner, Claudia, Johann-
Wieser- Strasse 13, D-8011 Dornach- Aschheim
(DE)**
Patentinhaber: **Ulitzka, Astrid, Mainstrasse 14,
D-4711 Dormagen (DE)**

(72) Erfinder: **Huber, Ludwig, deceased (DE)**

(74) Vertreter: **Gruss, Margret, Kitschburger Str. 226,
D-5000 Köln 41 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung hat einen in einem flüssigkeitsdichten Getriebegehäuse integrierten, stufenlos verstellbaren Fahrradtrieb zum Gegenstand, bei dem beim Umlauf zweier, auf der Tretkurbelachse bilateral angeordneter Exzenter zwei von ihren Fixpunkten ausgehenden, manuell um die Exzenter verschwenkbare und auf diesen aufliegenden Zugstränge in gegenläufige, variierbare Linearoszillation gebracht werden, die auf zwei Repetierrollen bei entsprechender Aufspulung und Verankerung der Zugstränge, in wechselseitig reversierende Drehbewegungen umgewandelt und mittels Übersetzungszahnräder auf zwei, auf der Abtriebswelle in deren Umlaufrichtung sperrend gelagerte Mitnehmerfreiläufe übertragen werden, wobei über die kraftschlüssige Klemmstellung des jeweilig beanspruchten Rechts- oder Linksmitnehmerfreilaufes der konsequent umlaufenden Abtriebswelle des der Oszillationszugkraft adäquate Drehmoment permanent und/oder temporär propulsierend mitgeteilt wird.

Zu besserer Beschleunigung, zur Erzielung höherer Fahrgeschwindigkeiten und einem der jeweiligen Straßenlage anzupassenden Anzugsvermögens, werden im Fahrradbau schaltbar veränderliche Übersetzungen geschaffen, von denen im wesentlichen die Getriebenabenschaltungen und die Kettenschaltungen bekannt und im Einsatz sind.

Diese Schaltungsarten sind allen Witterungseinflüssen ausgesetz und haben Kettenführung, so daß die Kettenglieder kaum oder unbefriedigend geschmiert werden können, wodurch Verschleiß und Leichtläufigkeit von Kette und Kettenritzel wesentlich beeinflußt sind. Ein Verkehrsunsicherheitsfaktor ergibt sich auch bei der Kettenschaltung durch ihre Verstellung mittels separat angeordneter Schalthebel. Im Zusammenhang mit dem Direktantrieb des Hinterrades vom Kettenblatt aus fehlte es bisher eine dem Fahrkomfort dienende, reifen-, rad- und fahrgestellschonende, biege- und verwindungssteife Hinterradschwingfederung anzuordnen.

Aufgabe der Erfindung ist es deshalb unter Abkehr von den herkömmlichen offenen Kettenführungen, einen in einem Lagerhalter angeordneten, kompakt gestalteten, in einem flüssigkeitsdichten Getriebegehäuse integrierten, stufenlosen verstellbaren Fahrradtrieb zu schaffen, bei dem unter Ausschluß von Umweltbedingungen eine wartungsfreie Tauchschmierung sichergestellt ist und, daß zufolge des von der Tretkurbelachse getrennt geführten Hinterradantriebes mittels einer Abtriebswelle, eine um deren Lagerstellen angeordnete Schwenklagerung eines der Hinterradschwingfederung dienenden Achsschenkelpaares bewirkt werden kann.

Zur Lösung dieser Aufgabe wird nach der Erfindung entsprechend den im Anspruch 1 enhaltenen Merkmalen vorgeschlagen, einen stufenlos verstellbaren, in einem Lagerhalter zusammengefaßten Fahrradtrieb zu schaffen, der in einer der Abkapselung gegen Umwelteinflüsse dienenden und für eine Tauchschmierung der Triebwerkteile geeigneten, flüssigkeitsdichten Getriebegehäuse integriert ist, das anstelle der konventionellen Tretkurbelachslagerung im Fahrradrahmen angeordnet, oder direkt - bei dessen entsprechender Ausgestaltung als Fahrradrahmenteilstück - in diesem untergebracht ist. Zwecks einer günstig zu gestaltenden Teil- und Fertigmontage und einer sicheren Verankerung im Getriebegehäuse sind die Tretkurbellagernaben und die der Abtriebwelle- und der Achsschenkellagerung dienenden Hohlwellenstummel mit dem Lagerhalter fest verbunden und flüssigkeitsdicht beidseitig durch die Seitenwandungen des Getriebegehäuses formschlüssig geführt.

Die Erfindung geht vom Funktionsprinzip des Faktorenflaschenzuges aus, nach dem das Längenverhältnis von "Krafthub zu Lasthub" durch den Umschlingungswinkel bestimmt wird, mit dem das von einem Festpunkt ausgehende Zugseil innerhalb des Grenzbereiches von 0 bis 180 Grad auf der Lastrolle aufliegt und, wobei diese Gegebenheit in dem Sinne für einen stufenlos verstellbaren Fahrradtrieb bei konträrem Funktionsverhalten genutzt werden kann, wobei die Lastrollenfunktion zwei, mit geringem seitlichen Abstand auf der Tretkurbelachse bilateral angeordneten Exzenter zugeordnet ist, wogegen die Zugseilfunktion von zwei Zugsträngen (die aus Fleyerketten, Drahtseilen oder Kunststoffbänder bestehen können) übernommen wird, die von einem Stationärhalter ausgehend, zunächst parallel verlaufend, als Auflauftrumms über einen gemeinsamen, auf einem um die Exzenter manuell verschwenkbaren Auflaufschwenkarm gelagerten Auflaufhalter führend, als Auflauftrumms auf dem einen Exzenter auf - und an dem Gegenexzenter anliegend, als gegenläufig linear-oszillierende Ablauftrumms wieiterverlaufend über zwei, auf den um die Exzenter in Gegenrichtung manuell verschwenkbaren Ablaufschwenkarm gelagerten Umlenkrollen zu zwei, über zwei gegenläufige Zahnräder miteinander kommunizierende Repetierrollen führen, auf deren Einen das ihr zugeordnete Ablauftrumm mit einer oder mehreren Lagen aufgespult und fest verankert ist, das zweite Ablauftrumm hingegen auf der diesem zugeordneten leeren Repetierrolle mit der für eine gleichsinnige, volle Aufspullänge erforderlichen Umfangsdistanz befestigt ist.

Die Anordnung ist so getroffen, daß bei dem durch den Tretvorgang einsetzende Umlauf der Exzenter - zufolge deren bilateralen Anordnung - auf den als Umkehrtriebe wirkenden Repetierrollen eine in gleichem Richtungssinn wechselseitige Auf- und Abspulung der Ablauftrumms erfolgt, wobei die gegenläufige Linearoszillation in wechselseitig reversible Drehbewegungen umgewandelt und mittels eines Übersetzungstriebes auf zwei, ihnen jeweils zugeordneten, auf der Abtriebswelle, in deren Umlaufrichtung in Klemmstellung stehend, gelagerten Mitnehmerfreiläufe übertragen werden, wobei das dabei sich bildende, der dem jeweilig abspulenden Ablauftrumm latenten Zugkraft adäquate Drehmoment, dank der hierbei wirksamen kraftschlüssigen Klemmstellung des dem vorwärtsumlaufenden Mitnehmerfreilaufes latenten auf der konsequent umlaufenden Abtriebwelle, Abtriebwelle permanent und/oder temporär propulsierend mitgeteilt wird.

Der erfindungsgemäßen, stufenlosen prinzipiellen Übersetzung liegt die Variierung der Umschlingungswinkel zugrunde, mit denen die Zugstränge auf ihren Exzentern aufliegen; und die damit verbundene Variabilität der Oszillationshublängen, wird bewirkt durch gegenseitiges Verschwenken der Auf- bzw. Ablauftrumms um die Exzenter mittels dem, mit einem selbsthemmenden Schneckentrieb zusammenwirkenden Auflauf-bzw. Ablaufschwenkarm, wobei die die Schwenkbewegungen auslösende Drehimpulse über eine mit der Schneckenwelle fest verbundene biegsame Welle, manuell fernbedient, etwa von einem Lenkerdrehgriff aus, erfolgen kann.

Als wesentliches Unterscheidungsmerkmal zu konventionellen Übersetzungsarten basiert die erfindungsgemäß prinzipielle Übersetzung auf einer der jeweiligen Oszillationshublänge entsprechenden, kraftschlüssigen Eingriffsdauer des jeweils auf die Abtriebswelle arbeitenden Mitnehmerfreilaufes bei einer zur Tretkurbelachse kongruenten Umlaufgeschwindigkeit: Das jeweilige Drehzahlverhältnis von Antriebs- zur Abtriebswelle ist über den gesamten, prizipiellen Übersetzungsbereich konstant.

Bei der Einschwenkung der auf den Umlenkrollen aufliegenden Ablauftrumms ergibt sich eine der dadurch jeweils induzierten Oszillationshublänge entsprechende Veränderung der Zugstrangwirklängen, die erfindungsgemäß entsprechend dosiert, eigens durch die aus der Verschwenkung der Auflauftrumms sich ergebenden Verlängerungen oder Verkürzungen selbständig kompensiert werden.

Ein weiteres Merkmal der Erfindung besteht in der form und kraftschlüssigen Anordnungsart des im Lagerhalter zusammengefaßten Gesamttriebes inform der beidseitig durch die Getriebegehäusewandungen flüssigkeitsdicht geführten Tretkurbellagernaben einerseits, und andererseits der gleichartig angeordneten, sowohl der Abtriebswellenlagerung, als auch der biege- und verwindungssteifen beidseitigen Lagerung des als Teilstück der Hinterradschwingfederung dienenden Achsschenkelpaares. Vorzugsweise ist das Getriebegehäuse, mit einigen Innenverrippungen versehen, als ein ein hohes Biege- und Widerstandsmoment aufweisender Kastenträger ausgebildet, dessen Formgebung trotz eines auf der Tretkurbelachse gelagerten Rücktrittfreilaufes, die Befestigung der beiden nach außen ausgebogenen Tretkurbeln in engerer Distanz erlaubt.

Die mit der Erfindung zu erzielenden Vorteile bestehen zunächst in der der prinzipiellen Übersetzung latenten Gesetzmäßigkeit, wonach alle über den gesamten Übersetzungsbereich sich ergebenden Drehzahländerungen der Abtriebswelle bei konstanter Pedalumlaufgeschwindigkeit bewirkt werden, d.h. daß durch jede Reduzierung oder Erhöhung der Pedalumläufe eine diesen jeweils adäquat folgende Verminderung bzw. Erweiterung des Gesamtübersetzungspotentials erzielt wird.

Daraus ergibt sich, daß für die Entfaltung nicht mehr der Reifenumfang als Faktor deren Berechnung, sondern die mittlere Umlaufgeschwindigkeit der Abtriebswelle bestimmend ist, die bereits von der Konstruktion her durch zweckdienliche Dimensionierungen der an der Übersetzung beteiligten Triebwerkteile festgelegt ist. Man hat es also in der Hand, durch den möglichen Einsatz von Laufräder mit kleinerem Durchmesser, einen wesentlich geringeren Rollwiderstand zu erzielen, was sich bei Bergfahrt oder Gegenwind besonders günstig auswirkt, letzteres in Verbindung damit, daß die dadurch weiter nach unten sich ergebende Sitzverlagerung die Widerstandsfläche des Fahrers um einiges vermindert wird. Außerdem erhöht sich die Stabilität beim Fahren und beim Start, besonders auf einem Radweg innerhalb einer vor einer Verkehrsampel wartenden Ansammlung von Verkehrsteilnehmern.

Die weiteren durch die Erfindung erzielbaren Vorteile sind in der Abkapselung aller gegen Umwelteinflüsse geschützten Details mit dem Vorzug einer wartungsfreien Tauchschmierung aller Triebwerksteile innerhalb des Getriebegehäuses zu sehen, wobei aus montagetechnischer Sicht die wenig erforderlichen, den Gesamtfahrradtrieb darstellenden Getriebeteile, insbesondere hinsichtlich preis und gewichtsgünstig zu gestaltender Fertigung, auffällt. Auch ist ersichtlich, daß die Tretkurbelfreiräume, die durch die schmale Getriebegehäusegegestaltung sich beidseitig ergeben, insbesonders auch durch das Fehlen des konventionell sonst hier sitzenden Kettenblattes, sich günstig auf die Beinkleider des Fahrers auswirken.

Schließlich erbringt auch die erfindungsgemäße Verwendung des biege- und verwindungssteifen Getriebegehäuses den Vorteil einer darauf resultierenden hohen Längs- und Querstabilität des Fahrradrahmens. Die Getrenntführung des Hinterradantriebes mittels der Abtriebswelle begünstigt eine einer starken Dauerbelastung heterogenen Schwingungen ausgesetzten, großflächige beidseitige Lagerung des Achsschenkelpaares. Dessen Anordnungsart bietet Möglichkeit daß, mit einer am Getriebegehäuse angeordneten Differentialfederung zusammenwirkend, der stufenlos verstellbare Gesamtfahrradtrieb als ein in sich geschlossenes Aggregat ausgeführt sein kann. Es ist auch zu erkennen, daß die erfindungsgemäße Schwingfederung die Verwendung kleiner Laufräder problemlos macht und daß sie nicht nur dem Fahrkomfort dient, sondern auch materialschonend die Verwendung der dem besonderen leichten Lauf dienenden schmalen Hochdruckreifen erlaubt.

Letztlich eröffnet sich auch unter dem Eindruck der dem Triebwerk eigenen geringen Dimensionen und seines geringen Gesamtgewichtes die Perspektive seines universalen Einsatzes, der sich insbesonders bei Erübrigung der für die Schwingfederung des Hinterrades erforderlichen Triebwerkteile äußerst vorteilhaft als Antriebsart für Tretboote und Tretflugzeuge eignen wird.

Die Erfindung ist nachstehend anhand von Zeichnungen näher erläutert und es zeigen:

Abb. 1   in schematischer Darstellung eine Ansicht des stufenlos verstellbaren Fahrradtriebes bei kleinstmöglicher Übersetzungsstellung.

Abb. 2   eine schematische Darstellung nach Abb. 1 in Übersetzungsendstellung.

Abb. 3   in Ansicht ein beispielsweise Ausführungsform der Erfindung mit einer abgewandelt ausgeführten Verschwenkvorrichtung in Schnittrichtung A - A der Abb. 4

Abb. 4   zur Verdeutlichung der aus Abb. 1 u. 2 nicht ersichtlichen Seitenverhältnisse eine Draufsicht in Schnittrichtung B - B der Abb. 3

Abb. 5   in einer Einzelheit die Anordnungsart der als Gesamtteile zusammenwirkenden Repetierrollen

Abb. 6   in Ansicht den Gesamttrieb als ein kompakt gestaltetes Triebwerksaggregat mit teilweiser imaginärer abtriebseitiger Getriebegehäuseseitenwandung zur Darstellung der abgewandelt ausgeführten Verschwenkvorrichtung und deren Auflauf- und Ablaufschwenkarme.

Abb. 7   eine Seitenansicht des Gesamttriebes in Pfeilrichtung "S"

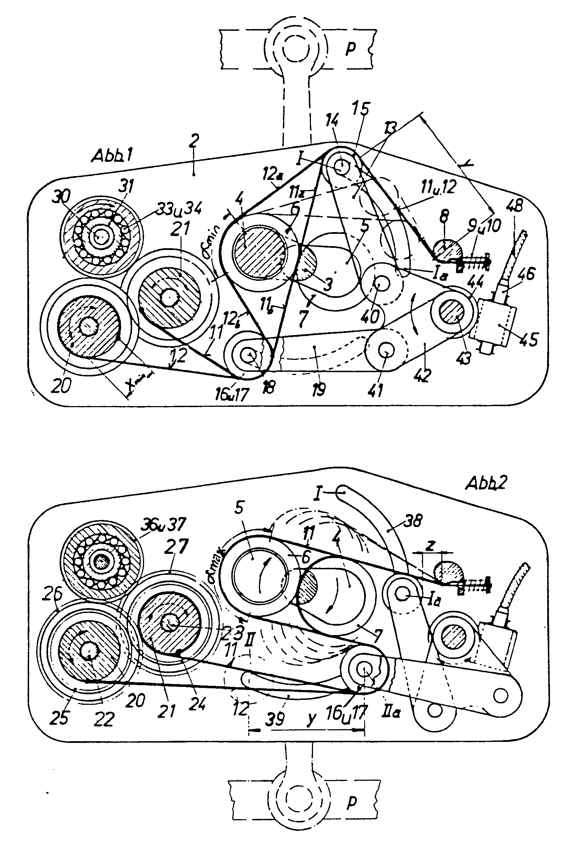

In den Abb. 1 u. 2 ist ein Lagerhalter mit 2 bezeichnet, eine Tretkurbelachse mit 3 mit darauf bilateral angeordneten Exzenter 4 u. Gegenexzenter 5 mit deren Laufrollen 6 u. 7, auf einem Stationärhalter 8 nebeneinander gesetzten Spannfedern 9 u.10 und auf diesen verankerten Zugsträngen 11 u. 12. Diese verlaufen parallel über einen auf einem Ablaufschwenkarm 13 mittels Gleitachse 14 gelagerten Auflaufhalter (Auflaufhalterrolle) 15, von dem ablaufend der Zugstrang 12 gewissermaßen als Auflauftrumm 12 a über den, in Getriebeausgangsstellung in vorderster Totpunktlage stehenden Exzenter 4, auf diesem mit dem aus dieser Grundstellung bedingten, kleinstmöglichen Umschlingungswinkel $\alpha_{min}$ aufliegend, quasi als Ablauftrumm 12 b über eine mit Gleitachse 18 auf einem Ablaufschwenkarm 19 gelagerte Umlenkrolle 16 als Zugstrang 12 zu einer Repetierrolle 20 weitergeführt, zunächst "voll", aber nunmehr mit der sich aus $\alpha_{min}$ ergebenden Verkürzung des damit auch kleinstmögichen Oszillationshubes $X_{min}$

aufgespult und fest verankert ist. Der Zugstrang 11 liegt gestreckt linear vom gemeinsamen Auflaufhalter 15 an der Laufrolle 7 des Gegenexzenters 5 an und führt zu einer auf gemeinsamer Gleitachse 18 gelagerten Umlenkrolle 17 und von dieser zu einer leeren Repetierrolle 21, auf der er aufspulbereit verankert ist.

Die Repetierrollen 20 u. 21 sind mit dem seitlichen Abstand der Zugstrangführung 11 u. 12 auf Lagerachsen 22 u. 23 drehbar gelagert, hintereinander angeordnet und sie stellen, jede für sich, wie insbesondere aus der Teilschnittzeichnung Abb. 5 ersichtlich, mit mit ihnen fest verbundenen inneren Zahnrädern 24 u. 25 und außenseitig auf ihnen fest verbundenen Übersetzungszahnräder 26 u. 27 je eine Einheit dar, die mittels der inneren Zahnräder 24 u. 25, die miteinander im Eingriff stehen und einen Umkehrtrieb bildend so zusammenwirken, daß einerseits die für die wechselseitige Auf- und Abspulung der Zugstränge 11 u. 12 gegenläufige reversible Drehungen der Repetierrollen 20 u. 21 erfolgen, andererseits die dabei umgewandelten Drehbewegungen mit den diesen latenten, den Oszillationszugkräften adäquaten Drehmomenten von der Repetierrolle 20 mit ihrem Übersetzungsrad 26 auf einen zugeordneten Rechtsmitnehmerfreilauf 33 und von der Repetierrolle 21 mit derem Übersetzungszahnrad 27 auf einen Linksmitnehmerfreilauf 34 übertragen werden.

Die stufenlose Drehzahlübersetzung erfolgt durch gegenseitiges Verschwenken der auf dem Auflaufhalter 15 aufliegenden Zugstrangauflauftrumms 11a u.12a und der um die Umlenkrollen 16 u. 17 führenden Zugstrangablauftrumms 11b u.12b (Abb. 1) mittels der Auflauf- und der Ablaufschwenkarme 13 u. 19, die mittels Bolzen 40 u. 41 auf einem gemeinsamen Doppelschwenkarm 42, der auf einer Schneckenradwelle 43 festsitzt, drehbar gelagert sind, wobei ein Schneckenrad 44 im Zusammenwirken mit einer Schnecke 45 und Schneckenwelle 46 einen selbsthemmenden Schneckentrieb bilden, der über eine Kupplung 47 und eine biegsame Welle 48 manuell fernbedient seine Drehimpulse erhält.

Der Auflaufhalter 15 ist mit seiner Gleitachse 14 in beidseitig im Lagerhalter 2 angeordneten Gleitbahnen 38 geführt, womit neben der eigentlichen Führungsaufgabe dem Zweck gedient wird, daß zur Entlastung des selbsthemmenden Schneckentriebes ein Großteil der bedingt durch die auf dem Auflaufhalter 15 aufliegenden Zugsträngen 11 u.12 latenten Zugkräfte von den Gleitbahnen aufgenommen werden mit der Folge, daß die stufenlose Verstellung erfindungsgemäß sowohl bei stehendem, als auch bei unter Belastung umlaufenden Gesamttrieb erfolgen kann.

In gleicher Weise sind auch die auf der gemeinsamen Gleitachse 18 gelagerten Umlenkrollen 16 u. 17 beidseitig in Gleitbahnen 39 geführt.

In Abb. 1 ist der erfindungsgemäße Gesamttrieb in seiner Ausgangslage mit der Anfangsübersetzungsstellung dargestellt. Die bilateral angeordneten Exzenter 4 bzw. Gegenexzenter 5 stehen hierbei rechtwinklig zum gestreckt durchlaufenden Zugstrang 11 in Tandemstellung. Der auf dem Auflaufschwenkarm 13 auf der Gleitachse 14 gelagerte Auflaufhalter 15 kommt am oberen Ende I der Gleitbahn 38 zu stehen, während die auf dem Ablaufschwenkarm 19 auf der Gleitachse 18 gelagerten Umlenkrollen 16 u. 17 am vorderen Ende II der Gleitbahn 39 zu stehen kommen.

In Abb. 2 ist der Gesamttrieb in seiner Endübersetzungsstellung gezeigt, bei der nach erfolgter Verstellung der Auflaufhalter 15 an das untere Ende Ia der Gleitbahn 38 und die Umlenkrollen 16 u. 17 an das hintere Ende IIa der Gleitbahn 39 verschwenkt sind. Dieser Verschwenkvorgang bzw. Verstellung, ist auf den durchaus möglichen Zeitraum eines halben Pedalumlaufes P bezogen, sodaß hierbei auch ein Wechsel der Exzentertandemstellung in dem Sinne erfolgt, daß der eingangs in hinterer Totpunktlage sich befundene Gegenexzenter 5 in die vordere Totpunktlage zu stehen kommt. Die von ihren Befestigungen auf den Spannfedern 9 u. 10 führende Zugstränge 11 u. 12 verlaufen zunächst parallel zueinander gestreckt linear, auf dem Auflaufhalter 15 aufliegend, zu den Exzenter hin, wobei der Zugstrang 12 über den Exzenter 4, auf diesem mit dem Maximalumschlingungswinkel $\alpha_{max}$ aufliegend, über die Umlenkrolle 16 zur nunmehr abgespulten vorderen Repetierrolle 20 verläuft, während der Zugstrang 11 in gleicher Weise über die Umlenkrolle 17 zur hinteren Repetierrolle 21 führt, auf der er, zufolge des reversierenden Zusammenwirkens mit der abgespulten Repetierrolle 20 und der dabei induzierten, maximalen Oszillationshublänge $X_{max}$, die gleich dem Aufspulumfang der Repetierrollen sein kann, aufgespult ist.

Die sich aus der Verschwenkung der auf den Umlenkrollen 16 u. 17 aufliegenden Zugstrangablauftrumms 11b u. 12b ergebenden Wirklängenveränderungen verhalten sich proportional zur halben Hublänge des jeweilig bei einer Verstellung induzierten Oszillationshubes, sodaß die maximale für die volle Einschwenkung erfoderliche Zusatzwirklänge y der Hälfte eines maximalen Oszillationshubes x entspricht.

Um diese Wirklängenveränderungen zu kompensieren, ist der Stationärhalter 8 erfindungsgemäß so angeordnet, daß er mit Abstand z hinter den in unterster Stellung Ia stehenden Auflaufhalter 15 zu stehen kommt, wobei der Abstand "z" durch den Punkt bestimmt ist, an dem sich die in der Ausgangstellung I von dem Auflaufhalter 15 mit der Länge "y" schräg nach unten verlaufenden Zugstränge 11 u. 12 mit den in Übersetzungsendstellung IIa linear fortlaufenden Zugsträngen 11 u. 12 kreuzen.

Dadurch wird, wie in Abb. 1 strichpunktiert dargestellt, ein selbständiger, eigens aus der Verschwenkbewegung des Auflaufhalters 15, gegebenenfalls in derem Zusammenwirken mit den Spannfedern 9 u. 10, sich ergebender Längenausgleich der Zugstränge 11 u. 12 bei konstanter Straffhaltung der Zugstränge erreicht.

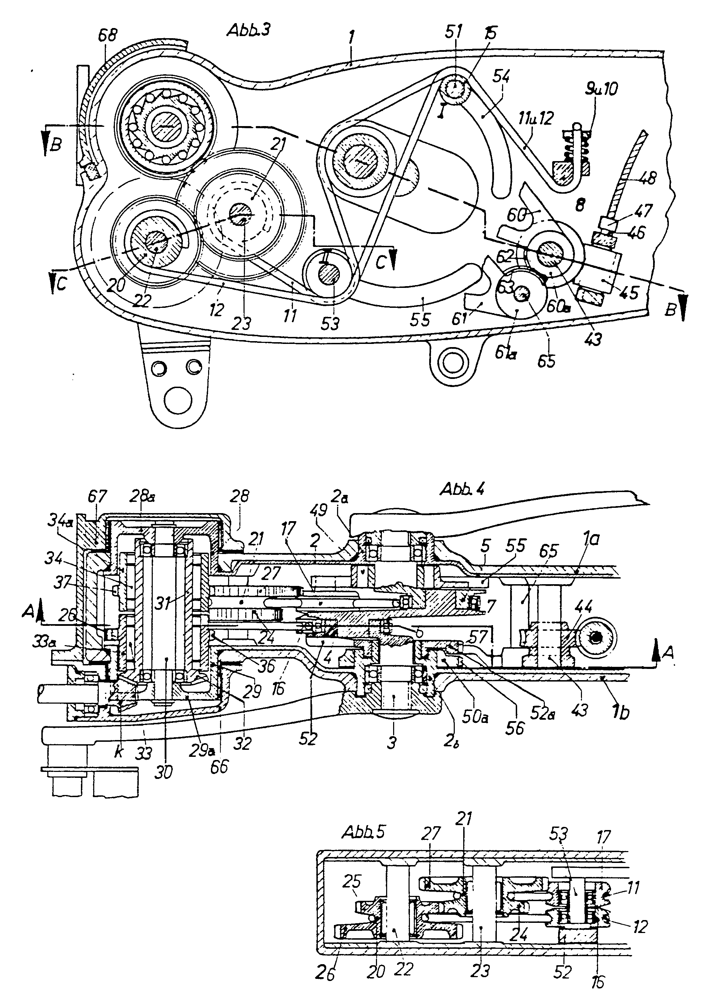

Die in den Abb. 3 bis 6 dargestellte beispielsweise Ausführungsform der Erfindung entspricht in Ausführung und Funktion den schematischen Darstellungen in Abb. 1 u. 2, zeigt aber eine Abänderung dahingehend, daß auf dem abgewandelt ausgeführten Auflaufschwenkarm 50 der auf einer Festachse 51 gelagerte Auflaufhalter 15 und daß auf dem geänderten Ablaufschwenkarm 52 die auf der gemeinsamen Festachse 53 gelagerten Umlenkrollen 16 u. 17 angeordnet sind, wobei der Auflauf- und der Ablaufschwenkarm 50 u. 52 abtriebseitig auf der Lagernabe 2b drehbar gelagert und die Festachse 51 u. 52 in den gegenüber im Lagerhalter 2 angeordneten Gleitbahnen 54 u. 55 geführt sind. Wie insbesonders aus Abb. 6 ersichtlich, erstreckt sich die Abänderung auch auf die gestaltete Art des als Schwenkhebel wirkenden Zahnsegmentes 60 und des Zahnsegmentes 61, deren Anordnung so getroffen ist, daß das Zahnsegment 60 auf der Schneckenradwelle 43 des beibehaltenen selbsthemmenden Schneckentriebes und der biegsamen Welle 48 befestigt ist, dessen Nabe 60a eine Verzahnung aufweist, die mit einer Nabenverzahnung 63 des auf Achse 65 drehbar gelagerten Zahnsegmentes 61 im Eingriff steht und dadurch bei einem von der Schnecke 45 über das Schneckenrad 44 erfolgenden Drehimpuls eine gegenläufige Verschwenkung der Zahnsegmente 60 u. 61 bewirkt wird, die mittels der Verzahnungen 58 u. 59, die mit den Verzahnungen 56 u.57 der Auflaufschwenkarmnabe 50a und der Ablaufschwenkarmnabe 52a im Eingriff stehen, die Zugstrangverschwenkungen bewirkend, übertragen werden.

Aus Abb. 4 ist zunächst ein auf der Tretkurbelachse 3 angeordneter Mitnehmerfreilauf 49, der zum Anschluß an eine der bereits bekannten Bremsarten als Rücktrittfreilauf vorgesehen ist, zu ersehen, der zufolge seiner Zweckbestimmung mit seinem Klemmkörper in entgegengesetzter Umlaufrichtung der Tretkurbelachse 3 in Klemmstellung gelagert ist. Weiterhin ist in Abb. 4 auch die beidseitige Anordnung der mit dem Lagerhalter 2 fest verbundenen Tretkurbellagernaben 2a u. 2b und deren flüssigkeitsdichte und formschlüssige Durchführung durch die Seitenwände 1a u. 1b des Getriebegehäuses 1 dargestellt; und auch die auf gleicher Weise mit dem Lagerhalter 2 fest verbundenen durch die Seitenwandungen 1a u. 1b des Getriebegehäuses 1 durchgeführten Hohlwellenstummel 29 und 28 sind ersichtlich.

Beide Hohlwellenstummel 28 u. 29, die um die Lagerflächenlängen aus dem Getriebegehäuse herausragen, weisen auf ihren äußeren Enden Blindflansche 28a u. 29a auf, die der Befestigung einer durchgehenden Verbindungsachse 30 dienen, auf der eine Abtriebswelle 31, die auf ihrer Abtriebseite ein Kegelrad 32 aufweist, drehbar gelagert ist. Auf der Abtriebswelle 31 ist abtriebseitig der Rechtsmitnehmerfreilauf 33 gelagert, dessen Mitnehmeraußenring 33a einen Zahnkranz 36 aufweist, der mit dem Übersetzungszahnrad 26 der Repetierrolle 20 im Eingriff steht, (in Abb. 3 strichpunktiert gezeichnet). Neben dem Rechtsmitnehmerfreilauf 33 ist auf der Abtriebswelle 31 der Linksmitnehmerfreilauf 34 gelagert, auf dessen Mitnehmeraußenring 34a der Zahnkranz 37 angeordnet ist, der mit dem Übersetzungszahnrad 27 der Repetierrolle 21 kämmt, sodaß über diese Verbindungen die wechselseitig reversible Umläufe der Repetierrollen 20 u. 21 auf die dadurch gegenläufig vorwärts und rückwärts drehende Recht- und Linksmitnehmerfreiläufe 33 u. 34 bei entsprechendem Übersetzungsverhältnis übertragen werden.

Der Umlauf der Abtriebswelle wird durch interkurrente Klemmkörper in den Rechts- und Linksmitnehmerfreiläufen 33 u. 34 dadurch bewirkt, daß deren Klemmkörper gleichsinnig in Umlaufrichtung der Abtriebswelle in Klemmstellung stehen, sodaß der Klemmkörper des rückwärtsdrehenden Mitnehmerfreilaufes 33 oder 34 im Leerlauf mitgenommen wird, während der vorwärtsumlaufende Mitnehmerfreilauf zufolge der hierbei kraftschlüssigen Klemmstellung des Klemmkörpers seine Drehung auf der Abtriebswelle 31 propulsiv innerhalb eines Zeitintervalls überträgt, wobei das Zeitintervall ausschließlich von der bei einem halben Pedalumlauf induzierten Oszillationshublänge des beteiligten Zugstranges 11 oder 12 abhängig ist, woraus letzlich die Basis der erfindungsgemäßen, prinzipiellen stufenlosen Übersetzung zu erkennen ist.

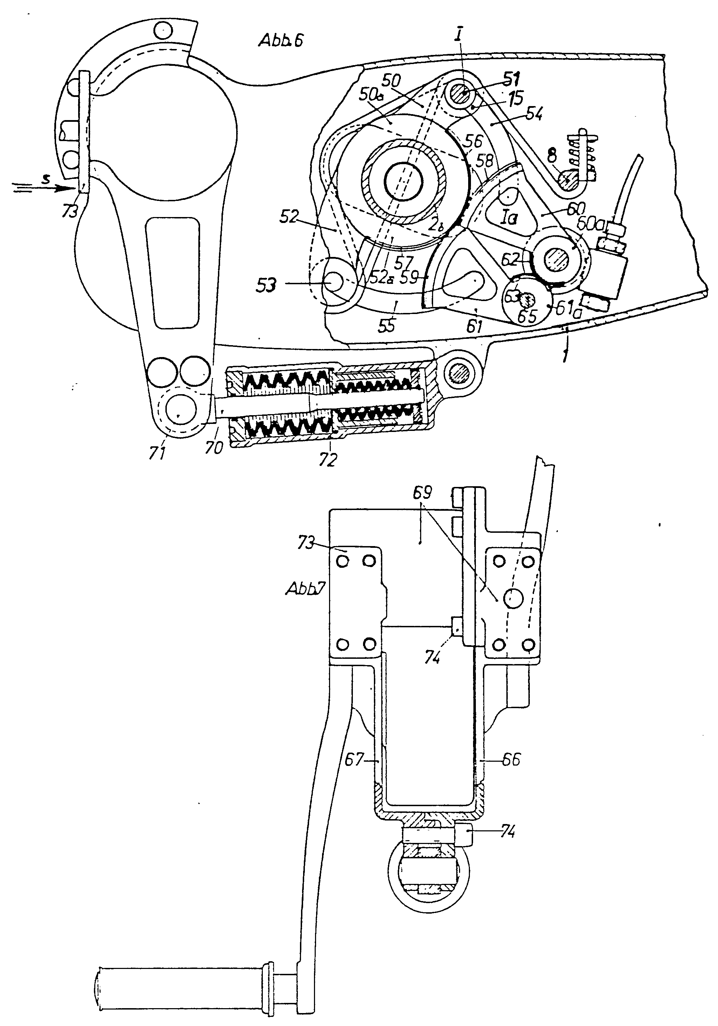

Letztlich ist auch aus Abb. 4 die staub- und flüssigkeitsdichte Schwenklagerung des aus Teil 66 und Teil 67 mittels lösbarer Verbindungen 74 kraftschlüssig zusammengefügten Achsschenkelpaares 66 u. 67, Abb. 7, auf den von dem Getriebegehäuse 1 abstehenden Wellenstummeln 28 u. 29 ersichtlich, wobei, wie in Abb. 3 gezeigt, das gegenseitige Verbindungsstück 68, besonders biege- und verwindungssteif, um das entsprechend ausgebildete Teilstück des Getriebegehäuses 1 verschwenkbar, rohrsegmentartig ausgebildet ist. In den Abb. 6 u. 7 ist eine beispielsweise Ausführungsform des der Hinterradschwingfederung als Teilstück zugehörenden Achsschenkelpaares 66 u. 67 in dessen Zusammenwirken mittels einer angelenkten Zugstange 70 mit einer am Getriebegehäuse 1 befestigten Differentialfederung 72 in der Form eines komplett gestalteten Antriebsaggregates dargestellt.

**Patentansprüche**

1. In einem flüssigkeitsdichten Getriebegehäuse (1) integrierter, stufenlos verstellbarer Fahrradantrieb mit Tretkurbel und mit eingelagertem Rücktrittfreilauf und angelenktem Schwingfederungsteil, wobei die Tretkurbel in einem Lagerhalter (2) gelagert ist und zwei bilateral angeordnete Exzenter (Exzenter (4) und Gegenexzenter (5) trägt, wobei je ein Zugstrang (11 u. 12) der jeweils an einem Stationärhalter (8) starr oder gefedert verankert und der jeweils über eine auf einem Auflaufschwenkarm (13) gelagerte Auflaufhalterrolle (15) geführt ist, mit variablen Umschlingungswinkeln ($\alpha$) auf Laufrollen (5 u. 7) der beiden Exzenter aufliegt und beim Umlauf der Tretkurbel in wechselseitige Linearoszillation versetzt wird, wobei die beiden Zugstränge (11 u. 12) über zwei Umlenkrollen (16 u. 17), welche auf einem Ablaufschwenkarm (19) gelagert sind, zu zugeordneten Repetierrollen (20, 21) geführt und auf diesen in gleichem Richtungssinn aufgespult und fest verankert werden, so daß die wechselseitigen Linearoszillationen in gegenläufig reversible Drehbewegungen umgewandelt werden, wobei jede Repetierrolle (20, 21) ein Zahnrad (25, 24) trägt, welche Zahnräder (25, 24) ein miteinander kämmendes Zahnradpaar bildet, wobei jede Repetierrolle ein weiteres Übersetzungszahnrad (26, 27) trägt, wobei das eine Übersetzungszahnrad (26) auf einen Rechtsmitnehmerfreilauf (33) und das andere Übersetzungszahnrad (27) auf einen Linksmitnehmerfreilauf (34) arbeitet, wobei die Mitnehmerinnenringe dieser beiden Freiläufe (33, 34) eine gemeinsame Abtriebswelle (31) bilden, die kontinuierlich umläuft und von der diese kontinuierliche Drehbewegung über Kegelräder (32, K) zum Antriebsteil übertragen wird, und wobei die Umschlingungswinkel ($\alpha$) durch gegenseitiges Verschwenken der einerseits auf in einer Schwenkbahn geführten Auflaufhalterrolle (15) und der andererseits auf in einer Schwenkbahn (39) geführten Umlenkrollen (16 u. 17) dergestalt variiert werden, daß Auflauf- u. Ablaufschwenkarm (13 u. 19) mit einem Doppelschwenkarm 42 über Lagerbolzen (40 u. 41) drehgelenkig verbunden sind.

2. Stufenlos verstellbarer Fahrradantrieb nach Anspruch 1, dadurch gekennzeichnet, daß der Doppelschwenkarm (42) auf einer Schneckenradwelle (43) drehfest sitzt, auf welcher ein Schneckenrad (44) befestigt ist, das mit einer auf einer Schneckenwelle sitzenden Schnecke (45) im Eingriff steht und einen selbsthemmenden Schneckentrieb bildet.

3. Stufenlos verstellbarer Fahrradtrieb nach Patentanspruch 2, dadurch gekennzeichnet, daß der Schneckentrieb seine die Schwenkbewegung des Schwenkhebels (42) bewirkenden Drehimpulse, manuell fernbedient, über eine mit der Schneckenwelle (46) fest verbundene biegsame Welle (48) erhält.

4. Stufenlos verstellbarer Fahrradtrieb nach den Patentansprüchen 1 bis 3, dadurch gekennzeichnet, daß auf der Tretkurbelachse (3) ein als Rücktrittfreilauf wirkender Mitnehmerfreilauf (49), entgegen der Tretkurbelumlaufrichtung in Klemmstellung stehend, gelagert ist (Abb. 4).

5. Stufenlos verstellbarer Fahrradtrieb nach den Patentansprüchen 1 bis 4, dadurch gekennzeichnet, daß Tretkurbellagernaben (2a u. 2b) und konzentrisch die Abtriebswelle (31) und deren Lagerung umschließende Hohlwellenstummel (28 u. 29) mit dem Lagerhalter (2) fest verbunden und formschlüssig durch Seitenwandungen (1a u. 1b) des Getriebegehäuses 1 herausragend geführt sind.

6. Stufenlos verstellbarer Fahrradtrieb nach Patentanspruch 5, dadurch gekennzeichnet, daß auf den Hohlwellenstummeln (28 u. 29) ein als Verbindungs- und Federungsteilstück der Hinterradschwingfederung dienendes Achsschenkelpaar staub und flüssigkeitsdicht drehbar gelagert ist, welches aus zwei Teilen (66, 67) besteht, die über einen Verbindungssteg (68) mittels lösbarer Verbindungen (74) kraftschlüssig verbunden sind, und welches über eine Differentialfederung (72) mit dem Getriebegehäuse gekoppelt ist.

## Claims

1. An infinitely variable bicycle drive integrated in a liquid-tight gear box housing (1) with tread crank and supported free-wheeling back pedal and articulated flexible spring member, with the tread crank shaft mounted in a bearing bracket (2) and supporting two bilaterally arranged eccentric cams (cam (4), an opposing cam (5)) where one tension belt each (11 and 12) is fixed or spring-mounted to a stationary clamp (8), guided via a take-up support roller (15) on a take-up arm (13), rests with variable looping angle ($\alpha$) on the rollers (5 and 7) of the two cams and is reciprocally oscillated in a linear direction during rotation of the tread crank, where the two tension belts (11 and 12) are guided via two deflection rollers (16 and 17) on a down arm (19) towards their respective repetition wheels (20 and 21), reeled and anchored in the same direction in order to translate the reciprocating linear oscillation into oppositely directed reversible rotation, each repetition wheel (20, 21) having a gear (25, 24), the gears forming an engaging gear set, and an additional transmission gear (26, 27), where the one transmission gear (26) operates on a clockwise free wheeling drive (33) and the other transmission gear (27) on a counterclockwise free-wheeling drive (34), and the drive rings of these two free-wheeling devices (33, 34) form a continuously rotating common drive shaft (31), whereby the continuous rotation is transmitted via conical gears (32, K) to the drive member, and the looping angles ($\alpha$) are varied by reciprocal swinging of the take-up roller (15) which is guided on a swing track, on the one hand, and the deflection rollers (16 and 17) guided on a swing track (39), on the other hand, such that the take-up and down arm (13 and 19) are swivel-mounted with bolts (40 and 41) to a double rocker arm (42).

2. Infinitely variable bicycle drive as claimed in Claim 1, wherein the double rocker arm (42) is rigidly fixed to a worm-gear shaft (43) equipped with a worm gear (44) which engages with a worm (45) on a worm-gear shaft, forming a self-locking worm gear drive.

3. Infinitely variable bicycle drive as claimed in Claim 1, wherein the worm-gear drive receives the momentum for the rocking movement of the rocker arm by means of manual remote control via a worm-gear shaft (46) rigidly connected to a flexible shaft (48).

4. Infinitely variable bicycle drive as claimed in Claims 1 to 3, wherein a free-wheeling drive (49), acting as a free-wheeling back pedal, and opposing the tread crank rotation, is mounted to the tread crank shaft (3). (Fig. 4)

5. Infinitely variable bicycle drive as claimed in Claims 1 to 4, wherein the tread crank hubs (2a and 2b) and concentrically the drive-end shaft (31) with its hollow shaft ends (28 and 29), enclosing the bearing, are rigidly connected to the bearing support (2) and positively locked, abutting from the side walls (1a and 1b) of the gear box housing (1).

6. Infinitely variable bicycle drive as claimed in Claim 5, wherein a set of rotatable journals, mounted dust and liquid-tight to the hollow shaft ends, serving as connecting and partial spring elements for the rear wheel spring suspension, consisting of the two parts (66, 67) positively connected via a web (68) by removable fasteners (74) and coupled to the gear box housing via a differential spring loaded retainer (72).

## Revendications

1. Changement de vitesse continu pour bicyclette intégré dans un carter étanche (1), comportant un pédalier, une roue libre de contre-pédalage incorporée et un élément de suspension monté articulé, le pédalier étant monté dans un support de palier (2) et portant de chaque côté un excentrique (excentrique (4) et contre-excentrique (5)), deux tirants (11 et 12), fixés rigidement ou par ressort à un support fixe (8) et passant sur une poulie supérieure (15) montée sur un bras pivotant supérieur (13), étant en applique, sur des angles d'enroulement variables ($\alpha$), sur des poulies (5 et 7) des deux excentriques et étant mis en oscillations linéaires alternées lors de la rotation du pédalier, les deux tirants (11 et 12) étant reliés par des poulies de renvoi (16 et 17) montées sur un bras pivotant inférieur (19) à des poulies répétiteuses conjuguées (20 et 21) sur lesquelles ils s'enroulent dans le même sens et dont ils sont rendus solidaires, les oscillations linéaires alternées étant ainsi converties en mouvements de rotation réversibles de sens opposés, chaque poulie répétiteuse (20, 21) portant un pignon (25, 24), lesquels pignons (25, 24) forment un engrenage, chaque poulie répétiteuse portant un autre pignon de transmission (26, 27), l'un (26) coopérant avec une roue libre droite (33) et l'autre (27) avec une roue libre gauche (34), les bagues intérieures de ces deux roues libres (33, 34) formant un arbre de sortie commun (31) qui tourne continuellement et dont le mouvement de rotation continu est transmis par couple conique (32, k) à l'organe de propulsion, les angles d'enroulement (α) variant par coulissement réciproque de la poulie supérieure (15) dans une glissière (38), d'une part, et des poulies de renvoi (16 et 17) dans une glissière (39), d'autre part, les bras pivotants supérieur et inférieur (13 et 19) étant reliés par un double bras pivotant (42) articulé en rotation par l'intermédiaire d'axes (40 et 41).

2. Changement de vitesse continu pour bicyclette selon la revendication 1, caractérisé en ce que le double bras pivotant (42) est solidaire en rotation d'un arbre (43) sur lequel est fixée une roue à vis (44) engrenant une vis (45) montée sur un arbre (46) et constituant un engrenage à vis autobloquant.

3. Changement de vitesse continu pour bicyclette selon la revendication 2, caractérisé en ce que l'engrenage à vis reçoit ses impulsions de rotation provoquant le mouvement de pivotement du double bras pivotant (42) par télécommande manuelle, par l'intermédiaire d'un flexible (48) solidaire de l'arbre à vis (46).

4. Changement de vitesse continu pour bicyclette selon les revendications 1 à 3, caractérisé en ce qu'une roue libre (49) fonctionnant en roue libre de contre-pédalage et bloquant en sens inverse du sens de rotation au pédalier est montée sur l'axe de pédalier (3) (Fig. 4).

5. Changement de vitesse continu pour bicyclette selon les revendications 1 à 4, caractérisé en ce que des moyeux de palier de pédalier (2a et 2b) et des bouts d'arbre creux (28 et 29) concentriques à l'arbre de sortie (31) et à son palier sont solidaires du support de palier (2) et guidés en saillie, par liaison positive, par des parois latérales (1a et 1b) du carter (1).

6. Changement de vitesse continu pour bicyclette selon la revendication 5, caractérisé en ce qu'une paire de joues d'axe servant d'élément de liaison et de suspension de la roue arrière, constituée de deux parties (66, 67) reliées par une entretoise (68) au moyen de liaisons démontables (74) et couplée au carter par un amortisseur différentiel (72), est montée articulée, par liaison négative, à l'abri de la poussière et de l'humidité, sur les bouts d'arbre creux (28 et 29).

Abb1

Abb2

Abb.3

Abb.4

Abb.5

Abb.6

Abb.7